# EUROPEAN PATENT APPLICATION

(11) **EP 2 832 773 A1**
(43) Date of publication of application: **04.02.2015**
(21) Application number: 13769159.8
(22) Date of filing: 12.03.2013
(51) Int. Cl.: C08J 5/04, B29C 70/10, B32B 15/08

(54) **STRUCTURAL MATERIAL FOR STRUCTURE**

(30) Priority: 27.03.2012 JP 2012070922
(71) Applicant: Mitsubishi Heavy Industries, Ltd., Tokyo 108-8215 (JP)
(72) Inventor: KAMIHARA, Nobuyuki, Tokyo 108-8215 (JP); YAMASHITA, Masayuki, Tokyo 108-8215 (JP); ABE, Toshio, Tokyo 108-8215 (JP); KAMINO, Yuichiro, Tokyo 108-8215 (JP)
(74) Representative: Henkel, Breuer & Partner
(86) International application number: PCT/JP2013/056789
(87) International publication number: WO 2013/146229

(57) **Abstract**

A system and method detects within an IP network an offending network device that has been adversely affecting the IP network performance. A discovery protocol frame is propagated to successive network switches and is formed as a field having a query for inquiring within each network switch to which the frame is propagated whether the network switch has a database entry regarding the MAC address and switch port for the offending network device to locate the offending network device. This discovery protocol frame includes a command for any network switch that has the offending network device connected thereto to disable the switch port to which the offending network device is connected or block all data traffic from the MAG address of the offending network device.

## Description

### {Technical Field}

The present invention relates to a structural material for a structure comprising a carbon fiber reinforced plastic.

### {Background Art}

Composite materials such as carbon fiber reinforced plastics (CFRP) are sometimes used as structural materials for structures such as aircraft, offshore wind turbines, automobiles and railway vehicles. CFRP uses carbon fiber as a reinforcing material, and uses a synthetic resin as a matrix.

Patent Literature (PTL) 1 describes an invention relating to a three-dimensional fiber reinforced resin composite material, and discloses a technique in which, in order to impart the fiber reinforced composite material with conductivity without any loss in productivity, the selvage yarn is formed from a conductive material having a higher conductivity than the in-plane direction yarn. Further, PTL 2 and 3 describe inventions relating to prepregs and carbon reinforced composite materials, and disclose techniques for incorporating conductive particles or fibers with the aim of achieving a combination of excellent impact resistance and conductivity. Moreover, PTL 4 describes an invention relating to an improved composite material, and discloses a technique for incorporating dispersed conductive particles within a polymeric resin with the aim of producing a composite material which has conductivity, but has little or no additional weight compared with standard composite materials.

### {Citation List}

### {Patent Literature}

{PTL 1} Japanese Unexamined Patent Application, Publication No. 2007-301838
{PTL 2} Japanese Unexamined Patent Application, Publication No. 2010-280904
{PTL 3} Japanese Unexamined Patent Application, Publication No. 2011-219766
{PTL 4} Japanese Unexamined Patent Application, Publication No. 2011-168792

### {Summary of Invention}

### {Technical Problem}

When a structural material for a structure which uses CFRP is exposed to a lightning strike, the electric current that flows through the interior of the structural material generates Joule heat (RI²) in the interior. Because of the effect of this heat generation, damage to the structural material occurs near the point of the lightning strike, from the outer surface into the interior of the material.

Conventionally, in order to prevent damage by lightning strikes, a metal lightning-resistant mesh or lightning-resistant foil has been attached to the surface of the CFRP to impart the structural material with conductivity. As a result, when a lightning strike occurs, the electric current flows into the mesh or foil, and is prevented from flowing into the interior of the CFRP. However, the workability of meshes and foils is poor, and foils tend to be particularly heavy. Consequently, problems arise in that considerable time and effort is required during production, and the weight of the overall structure increases.

The present invention has been developed in light of the above circumstances, and has an object of providing a structural material for a structure which enables a reduction in weight, while reducing the time and effort required during production and ensuring favorable lightning resistance performance.

### {Solution to Problem}

In order to achieve the above object, a structural material for a structure of the present invention adopts the aspects described below.

In other words, a structural material for a structure according to the present invention comprises a carbon fiber reinforced plastic in which the reinforcing material comprises a carbon fiber, the matrix comprises a plastic, and the resistivity in the sheet thickness direction is at least 1 Ωcm but not more than 200 Ωcm.

According to this invention, because the carbon fiber reinforced plastic includes a reinforcing material comprising a carbon fiber and a matrix comprising a plastic, and has a resistivity in the sheet thickness direction that is at least 1 Ωcm but not more than 200 Ωcm, the structural material for a structure is imparted with conductivity. Accordingly, when the structural material for a structure is subjected to a lightning strike, Joule heat generated inside the material can be suppressed. If the conductivity is further enhanced so that the resistivity in the sheet thickness direction is less than 1 Ωcm, then the effects of the method used for imparting conductivity to the carbon fiber reinforced plastic mean that the strength of the structural material for a structure cannot be maintained. In contrast, if the conductivity is reduced so that the resistivity in the sheet thickness direction exceeds 200 Ωcm, then the Joule heat generated within the interior of the structural material upon a lightning strike increases, and the degree of damage to the structural material for a structure increases. The structural material for a structure is, for example, a structural material used in a structure such as an aircraft, an offshore wind turbine, an automobile, or a railway vehicle.

In the invention described above, the carbon fiber reinforced plastic may have a resistivity in the sheet thickness direction of not more than 100 Ωcm.

According to this invention, because the resistivity in the sheet thickness direction of the carbon fiber reinforced plastic is even lower than 200 Ωcm, and not more than 100 Ωcm, when the structural material for a structure is subjected to a lightning strike, the Joule heat generated inside the material can be further suppressed.

In the invention described above, a metal foil or a metal mesh may be provided on the surface of the carbon fiber reinforced plastic.

According to this invention, the metal foil or metal mesh can enhance the conductivity in the structural material for a structure. In the invention described above, because the carbon fiber reinforced plastic also has conductivity, the lightning resistance performance required of the metal foil or metal mesh can be moderated compared with the case where the carbon fiber reinforced plastic in the structural material for a structure lacks conductivity. For example, the thickness of the metal foil can be reduced to achieve a lighter weight, a metal mesh can be used in situations that would typically require a metal foil, or the metal mesh can be replaced with another mesh having a larger mesh size.

### {Advantageous Effects of Invention}

According to the present invention, the structural material for a structure is imparted with conductivity by the carbon fiber reinforced plastic, so that when the structural material for a structure is subjected to a lightning strike, Joule heat generated inside the material can be suppressed. As a result, the weight can be reduced, while reducing the time and effort required during production and ensuring favorable lightning resistance.

### {Brief Description of Drawings}

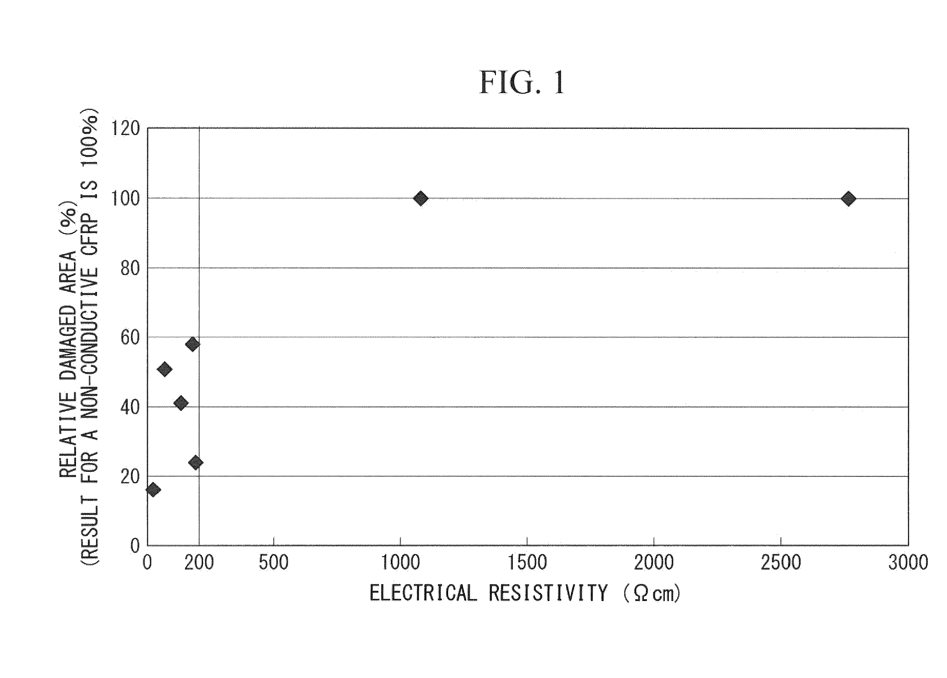

{Fig. 1} A graph illustrating the relationship between the resistivity (Ωcm) in the sheet thickness direction and the relative damaged area (%) for a series of test pieces.

### {Description of Embodiments}

Embodiments according to the present invention are described below.

### {First Embodiment}

A structural material for a structure according to a first embodiment of the present invention is described below.

The structural material for a structure according to the first embodiment of the present invention comprises a carbon fiber reinforced plastic (CFRP). The structural material for a structure is used, for example, in an aircraft, an offshore wind turbine, an automobile, or a railway vehicle. Hence, the structural material for a structure has sufficient strength for the structure in which it is used.

In the CFRP used in the structural material for a structure of this embodiment, the reinforcing material includes a carbon fiber, and the matrix includes a plastic. In the CFRP, at least one of the reinforcing material and the matrix is adjusted to achieve electrical conductivity. For example, the type, amount, structure or properties or the like of the carbon fiber or the plastic may be adjusted.

The carbon fiber may be laminated across a plurality of layers in the thickness direction of the structural material for a structure. Examples of the method used for laminating the carbon fiber include a method in which fibers produced by finely cutting a continuous carbon fiber are applied uniformly between layers of the plastic, and a method in which a carbon fiber layer having continuous carbon fibers aligned with directivity is immersed in the plastic. Various techniques can be used as the method for using the carbon fiber to impart the CFRP with conductivity, and a detailed description is omitted from this description. In one example, the entire CFRP can be imparted with conductivity by using finely cut fibers of a continuous carbon fiber.

The matrix includes a plastic such as a thermosetting resin like an unsaturated polyester or an epoxy resin. The matrix may be imparted with conductivity, and although various techniques can be used as the method for imparting the plastic such as a thermosetting resin with conductivity, a detailed description is omitted from this description. Examples of the method used for imparting the matrix with conductivity include a method in which conductive particles or fibers are incorporated within the plastic, and a method in which the plastic itself is imparted with conductivity.

The resistivity in the sheet thickness direction of the structural material for a structure is, for example, at least 1 Ωcm but not more than 200 Ωcm, and is preferably at least 1 Ωcm but not more than 100 Ωcm. Provided the resistivity in the sheet thickness direction of the structural material for a structure satisfies these ranges, the structural material for a structure has conductivity and a low resistivity, meaning that when the structural material for a structure is subjected to a lightning strike, the Joule heat (RI²) generated in the interior of the material can be suppressed. The sheet thickness direction of the structural material for a structure refers to the direction perpendicular to the in-plane direction of the structural material for a structure, and is the direction in which a measurement is made on the assumption that this is the direction in which the lightning current would penetrate in the case of a lightning strike.

If the conductivity is further enhanced so that the resistivity in the sheet thickness direction is less than 1 Ωcm, then the effects of the method used for imparting the conductivity to the CFRP, such as the use of various conductivity-imparting materials, mean that the strength of the structural material for a structure cannot be maintained. Accordingly, the resistivity in the sheet thickness direction of the structural material for a structure is preferably at least 1 Ωcm.

On the other hand, if the conductivity is reduced so that the resistivity in the sheet thickness direction exceeds 200 Ωcm, then the Joule heat generated within the interior of the structural material upon a lightning strike increases, and the degree of damage to the structural material for a structure increases. Accordingly, the resistivity in the sheet thickness direction of the structural material for a structure is preferably not more than 200 Ωcm. Further, if the resistivity in the sheet thickness direction of the structural material for a structure is even lower than 200 Ωcm, and not more than 100 Ωcm, then when the structural material for a structure is subjected to a lightning strike, the Joule heat generated inside the material can be further suppressed, and the degree of damage to the structural material for a structure can be further reduced.

### {Second Embodiment}

Next is a description of a structural material for a structure according to a second embodiment of the present invention.

The structural material for a structure according to the first embodiment described above comprised a carbon fiber reinforced plastic (CFRP), and an example was described in which no metal foil or metal mesh was provided on the CFRP surface, but the present invention is not limited to this particular example.

The structural material for a structure of the present embodiment comprises a CFRP, and a metal foil or a metal mesh provided on the surface of the CFRP.

The CFRP used in the structural material for a structure of this embodiment is the same as the CFRP of the first embodiment described above, wherein at least one of the carbon fiber and the plastic is adjusted so that the CFRP exhibits conductivity. A detailed description of the CFRP would merely repeat the above description, and is therefore omitted.

The metal foil or metal mesh (hereafter referred to as the "foil" or "mesh" respectively) are, for example, formed from highly conductive copper. The foil or mesh is provided across the surface of the CFRP, covering either all or part of the surface. By providing the foil or mesh, the conductivity in the structural material for a structure can be enhanced.

In the present embodiment, the CFRP that constitutes the structural material for a structure also has conductivity. Accordingly, the lightning resistance performance required of the foil or mesh provided with the CFRP can be moderated compared with conventional examples in which the CFRP in the structural material for a structure lacks conductivity. For example, the thickness of the foil can be reduced to achieve a lighter weight, a mesh can be used in situations that would typically require a foil, or the mesh can be replaced with another mesh having a larger mesh size.

### {Examples}

Next is a description of the results obtained when test pieces were prepared in accordance with the first embodiment of the present invention and a conventional example, and these test pieces were then subjected to a lightning test.

In this test, the difference in damage was compared for a structural material for a structure comprising a CFRP imparted with conductivity (the first embodiment), and a structural material for a structure comprising a CFRP not imparted with conductivity (conventional example). Neither material was provided with a metal mesh or metal foil.

The test piece based on the first embodiment (hereafter referred to as "the first example") and the test piece based on the conventional example were both sheet-like members approximately 50 cm square and having a sheet thickness of approximately 1.5 mm. In each test piece, the CFRP had an 8-ply structure (8 laminated layers) of fiber layers.

The first example was imparted with conductivity, and had a resistivity in the sheet thickness direction of 6 Ωcm. On the other hand, the conventional example was not imparted with conductivity, and had a resistivity in the sheet thickness direction of 3,000 Ωcm.

The lightning resistance test method conformed to the method disclosed in the Arc Entry Test of the Aircraft Lightning Test Methods (ARP5416) of SAE International.

The test results are described below.

Visual inspection revealed that in the conventional example not imparted with conductivity, damage occurred across an area of length 225 mm × width 250 mm on the surface to which a voltage was applied by electrical discharge. Further, damage also occurred across a smaller area on the rear surface opposite the surface to which the voltage was applied.

On the other hand, in the first example which was imparted with conductivity, damage occurred across an area of length 130 mm × width 140 mm on the surface to which the voltage was applied by electrical discharge. The rear surface opposite the surface to which the voltage was applied was maintained in the same state as that prior to the voltage application, and suffered no damage.

Accordingly, the results of visual inspection confirmed that damage caused by lightning current could be reduced in the CFRP imparted with conductivity and having a resistivity in the sheet thickness direction of 6 Ωcm.

Further, according to a non-destructive inspection (NDI) of the surface to which the voltage was applied by electrical discharge, the damaged area in the first example imparted with conductivity was half of that of the conventional example not imparted with conductivity. Further, in the conventional example, the damaged portion penetrated through the sheet from the surface to the rear surface, whereas in the first example imparted with conductivity, the damage penetrated only as far as the second ply from the surface.

As described above, the lightning tests confirmed that in the structural material for a structure comprising a CFRP imparted with conductivity, the damaged portion is limited to the surface region, and the area of that damaged portion can also be reduced, indicating that by imparting a CFRP with conductivity, the CFRP is able to develop a lightning resistance effect.

Next, additional test pieces were prepared for the first embodiment of the present invention and the conventional example, and the results of subsequently performing lightning resistance tests are described with reference to FIG. 1. In the same manner as that described above, the lightning resistance test method conformed to the method disclosed in the Arc Entry Test of the Aircraft Lightning Test Methods (ARP5416) of SAE International with the Arc Entry Test of the Aircraft Lightning Test Methods (ARP5416) of SAE International.

Fig. 1 illustrates the relationship between the resistivity (Ωcm) in the sheet thickness direction and the relative damaged area (%) for a series of test pieces. As a result of performing lightning resistance tests on a plurality of test pieces having different resistivity values in the sheet thickness direction, the results shown in Fig. 1 were obtained. In Fig. 1, the damaged area of each test piece is indicated as a percentage relative to a value of 100% for the damaged area of a structural material for a structure comprising a CFRP not imparted with conductivity.

Based on the test results it is evident that provided a structural material for a structure comprising a CFRP is imparted with conductivity and has a resistivity in the sheet thickness direction of not more than 200 Ωcm, the relative damaged area can be suppressed to 60% or less, and if the resistivity in the sheet thickness direction is not more than 100 Ωcm, then the relative damaged area can be suppressed to 50% or less.

In other words, it was confirmed that in a CFRP imparted with sufficient conductivity that the resistivity in the sheet thickness direction is not more than 200 Ωcm, the damage caused by lightning current is able to be reduced compared to that observed in a CFRP not imparted with conductivity, and in a CFRP imparted with sufficient conductivity that the resistivity in the sheet thickness direction is not more than 100 Ωcm, the damage caused by lightning current can be further reduced.

As described above, in the first and second embodiments, a lightning resistance effect can be obtained even when the type of metal mesh or metal foil that has conventionally been provided is omitted, and therefore lightning resistance countermeasures can be reduced significantly. Further, if a mesh or foil is provided on a CFRP imparted with conductivity, then compared with conventional examples, the thickness of the foil can be reduced to achieve a lighter weight, a mesh can be used in situations that would typically require a foil, or the mesh can be replaced with another mesh having a larger mesh size. Accordingly, the time and effort required working with the mesh or foil can be reduced or eliminated. Furthermore, any increase in the weight of the overall structure due to the mesh or foil can be suppressed.

In other words, the structural material for a structure according to the embodiments of the present invention is imparted with conductivity by the CFRP, so that when the structural material for a structure is subjected to a lightning strike, Joule heat generated inside the material can be suppressed. As a result, the weight can be reduced, while reducing the time and effort required during production and ensuring favorable lightning resistance performance.

## Claims

1. A structural material for a structure, the structural material comprising a carbon fiber reinforced plastic in which a reinforcing material comprises a carbon fiber, a matrix comprises a plastic, and a resistivity in a sheet thickness direction is at least 1 Ωcm but not more than 200 Ωcm.

2. The structural material for a structure according to Claim 1, wherein the carbon fiber reinforced plastic has a resistivity in the sheet thickness direction of not more than 100 Ωcm.

3. The structural material for a structure according to Claim 1 or 2, wherein a metal foil or a metal mesh is provided on a surface of the carbon fiber reinforced plastic.
